# EUROPEAN PATENT APPLICATION

(11) **EP 3 418 197 A1**
(43) Date of publication of application: **26.12.2018**
(21) Application number: 18178885.2
(22) Date of filing: 20.06.2018
(51) Int. Cl.: B64D 27/24, F01D 15/10, B64D 27/02

(54) **PROPULSION SYSTEM FOR AN AIRCRAFT**

(30) Priority: 23.06.2017 US 201715631133
(71) Applicant: General Electric Company, Schenectady, NY 12345 (US)
(72) Inventor: HON, Robert Charles, Cincinnati, OH Ohio 45215 (US); GANSLER, Michael Thomas, Cincinnati, OH Ohio 45215 (US)
(74) Representative: Williams, Andrew Richard

(57) **Abstract**

A hybrid-electric propulsion system includes a propulsor 104A, a turbomachine 102A, and an electrical system. The electrical system includes a first electric machine 56A coupled to the turbomachine 102A and an electric energy storage unit 55. A method 300 for operating the hybrid-electric propulsion system includes operating the hybrid electric propulsion system in a flight operation mode at 302, including rotating at 304 the first electric machine with the turbomachine to generate electrical power and provide at least a portion of such electrical power to the electric energy storage unit. The method also includes operating at 312 the hybrid electric propulsion system in a maintenance operation mode, including providing at 314 electrical power from an electrical power source to the first electric machine such that the first electric machine rotates a compressor and a turbine of the turbomachine during a borescope inspection of the turbomachine.

## Description

### FIELD

The present subject matter relates generally to a hybrid-electric aircraft propulsion system, and a method for operating the hybrid-electric aircraft propulsion system during, e.g., a maintenance operation mode.

### BACKGROUND

A gas turbine engine generally includes a fan and a core arranged in flow communication with one another. Additionally, the core of the gas turbine engine generally includes, in serial flow order, a compressor section, a combustion section, a turbine section, and an exhaust section. In operation, air is provided from the fan to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gasses through the turbine section drives the turbine section and is then routed through the exhaust section, e.g., to atmosphere.

Periodically, the gas turbine engine is inspected during maintenance intervals to determine an amount of wear on, e.g., the internal components of the gas turbine engine. For example, gas turbine engines typically include one or more inspection holes (or borescope holes) allowing a technician to view into a core air flowpath of the gas turbine engine. A flexible borescope may be inserted through these inspection holes facilitating such inspection and allowing the technician to take images of the one or more components. In order to fully inspect certain of these components, the gas turbine engine must be rotated during the inspection. Rotating the gas turbine engine when the gas turbine engine is not operating, however, typically requires a separate, dedicated motor to be either attached to the gas turbine engine during such maintenance operations, or included in the gas turbine engine package.

However, attaching a separate, dedicated motor to the gas turbine engine to rotate the gas turbine engine during such maintenance operation creates additional work for the maintenance personnel, and including such a dedicated motor in the gas turbine engine package creates additional weight and cost for the gas turbine engine. Accordingly, a propulsion system capable of turning the gas turbine engine during borescope inspection overcoming these obstacles would be useful.

### BRIEF DESCRIPTION

Aspects and advantages of the invention will be set forth in part in the following description, or may be obvious from the description, or may be learned through practice of the invention.

In one exemplary aspect of the present disclosure, a method for operating a hybrid-electric propulsion system of an aircraft provided. The hybrid-electric propulsion system includes a propulsor, a turbomachine, and an electrical system. The electrical system includes a first electric machine coupled to the turbomachine and an electric energy storage unit. The method includes operating the hybrid electric propulsion system in a flight operation mode, wherein operating the hybrid electric propulsion system in the flight operation mode includes rotating the first electric machine with the turbomachine to generate electrical power and provide at least a portion of such electrical power to the electric energy storage unit. The method also includes operating the hybrid electric propulsion system in a maintenance operation mode, wherein operating the hybrid electric propulsion system in the maintenance operation mode includes providing electrical power from an electrical power source to the first electric machine such that the first electric machine rotates a compressor and a turbine of the turbomachine during a borescope inspection of the turbomachine.

In certain exemplary aspects the hybrid electric propulsion system further includes a propulsor, wherein the electrical system further includes a second electric machine coupled to the propulsor, and wherein operating the hybrid electric propulsion system in the flight operation mode further includes providing electrical power from the first electric machine, the electric energy storage unit, or both to the second electric machine to drive the propulsor and provide a propulsive benefit for the aircraft.

In certain exemplary aspects providing electrical power from the electrical power source to the first electric machine such that the first electric machine rotates the compressor and the turbine of the turbomachine during the borescope inspection includes rotating the compressor and the turbine with the first electric machine at a rotational speed less than about five revolutions per minute.

In certain exemplary aspects providing electrical power from the electrical power source to the first electric machine such that the first electric machine rotates the compressor and the turbine of the turbomachine during the borescope inspection includes rotating the compressor and the turbine with the first electric machine at a rotational speed less than about one revolution per minute.

In certain exemplary aspects operating the hybrid electric propulsion system in the maintenance operation mode further includes receiving a user input command to rotate the compressor and the turbine of the turbomachine during the borescope inspection of the turbomachine, and wherein providing electrical power from the electrical power source to the first electric machine such that the first electric machine rotates the compressor and the turbine during the borescope inspection includes providing electrical power from the electrical power source to the first electric machine such that the first electric machine rotates the compressor and the turbine during the borescope inspection in response to receiving the user input command.

In certain exemplary aspects the turbomachine defines a core air flowpath and further includes a spool coupling the compressor and the turbine, and wherein the first electric machine is mechanically coupled to, and rotatable with, the compressor, the turbine, and the spool at a location inward of the core air flowpath.

For example, in certain exemplary aspects the turbine is a high pressure turbine, wherein the compressor is a high pressure compressor, wherein the spool is a high pressure spool, and wherein the turbomachine further includes a low pressure turbine, a low pressure compressor, and a low pressure shaft coupling the low pressure compressor and the low pressure turbine.

In certain exemplary aspects operating the hybrid electric propulsion system in the flight operation mode further includes providing electrical power from the electric energy storage unit to the first electric machine such that the first electric machine rotates, or assists with rotating, the turbomachine.

In certain exemplary aspects rotating the first electric machine with the turbomachine to generate electrical power includes generating at least about fifty kilowatts of electrical power.

In certain exemplary aspects electric energy storage unit is configured to store at least about fifty kilowatt-hours of electrical power.

In certain exemplary aspects the electrical power source is the electric energy storage unit.

In certain exemplary aspects providing electrical power from the electrical power source to the first electric machine such that the first electric machine rotates the compressor and the turbine of the turbomachine during the borescope inspection includes rotating the compressor and the turbine with the first electric machine to a specified angular position.

In one exemplary embodiment of the present disclosure, a hybrid-electric propulsion system is provided. The hybrid electric propulsion system includes a propulsor, a turbomachine, and an electrical system including a first electric machine, a second electric machine, and an electric energy storage unit electrically connectable the first and second electric machines. The first electric machine is coupled to the turbomachine and the second electric machine is coupled to the propulsor for driving the propulsor to provide a propulsive benefit for the aircraft. The hybrid electric propulsion system further includes a controller configured to provide electrical power from the electric energy storage unit to the first electric machine such that the first electric machine rotates the compressor and the turbine of the turbomachine during a borescope inspection of the turbomachine.

In certain exemplary embodiments the controller is configured to rotate the compressor and turbine of the turbomachine at a rotational speed less than five revolutions per minute during the borescope inspection of the turbomachine.

In certain exemplary embodiments the hybrid electric propulsion system further includes a remote control operably connected to the controller, wherein the controller is configured to provide electrical power from the electric energy storage unit to the first electric machine such that the electric machine rotates the compressor and the turbine during the borescope inspection of the turbomachine in response to receiving an input from the remote control.

In certain exemplary embodiments energy storage unit is configured to store at least about fifty kilowatt-hours of electrical power, and wherein the first electric machine is configured to generate at least about fifty kilowatts of electrical power during operation of the turbomachine.

In certain exemplary embodiments the turbine and the compressor at least partially define a core air flowpath, and wherein the electric machine is positioned inward of the core air flowpath.

In certain exemplary embodiments the first electric machine is an electric motor/generator.

In certain exemplary embodiments the turbomachine is configured as part of a first turbofan engine, and wherein the propulsor is configured as part of a second turbofan engine.

In certain exemplary embodiments the turbomachine is configured as part of a turbofan engine, and wherein the propulsor is configured as part of an electric propulsor assembly.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a top view of an aircraft according to various exemplary embodiments of the present disclosure.
FIG. 2 is a schematic, cross-sectional view of a gas turbine engine in accordance with an exemplary embodiment of the present disclosure.
FIG. 3 is a schematic, close-up, cross-sectional view of a compressor of the exemplary gas turbine engine depicted in FIG. 2.
FIG. 4 is a schematic, cross-sectional view of an electric fan assembly in accordance with an exemplary embodiment of the present disclosure.
FIG. 5 is a schematic view of a hybrid electric propulsion system in accordance with another exemplary aspect of the present disclosure.
FIG. 6 is a flow diagram of a method for operating a hybrid electric propulsion system of an aircraft in accordance with an exemplary aspect of the present disclosure.
FIG. 7 is a computing system according to example aspects of the present disclosure.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to a flow in a pathway. For example, with respect to a fluid flow, "upstream" refers to the direction from which the fluid flows, and "downstream" refers to the direction to which the fluid flows. However, the terms "upstream" and "downstream" as used herein may also refer to a flow of electricity.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a ten percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

The present disclosure is generally related to a hybrid electric propulsion system having a propulsor, a turbomachine, and an electrical system. The electrical system includes a first electric machine, a second electric machine, and an electric energy storage unit electrically connectable to the first and second electric machines. The first electric machine is coupled (i.e., directly or indirectly coupled) to a high pressure system of the turbomachine and the second electric machine is coupled to the propulsor for driving the propulsor to provide a propulsive benefit for the aircraft. For example, in certain exemplary embodiments, the turbomachine may be configured as part of a turbofan engine and the propulsor may be configured as part of an electric propulsor assembly (e.g., an electric fan). Alternatively, in other exemplary embodiments, the turbomachine may be configured as part of a first turbofan engine and the propulsor may be configured as part of a second turbofan engine. Alternatively, still, in other exemplary embodiments, the turbomachine and propulsor may be configured together as part of a turbofan engine. Further, in other exemplary embodiments these components may be configured as part of, e.g., turboprop engines, or any other suitable gas turbine engine.

In certain operations, the hybrid electric propulsion system is operated in a flight operation mode. When operated in the flight operation mode, the turbomachine may be operated to drive the first electric machine, such that the first electric machine may generate electrical power. The electrical power may be provided to one or both of the electric energy storage unit and the second electric machine, such that the second electric machine may provide a propulsive benefit for the aircraft. In such a manner, the hybrid electric propulsion system may generate thrust for the aircraft through operation of the turbomachine, and further through transfer of electrical power to the second electric machine.

However, in other operations, the hybrid electric propulsion system may be operated in a maintenance operation mode. When operated in a maintenance operation mode, the hybrid electric propulsion system may facilitate certain maintenance operations. For example, when operated in the maintenance operation mode, an electrical power source (e.g., the electric energy storage unit) may provide electrical power to the first electric machine such that the first electric machine rotates, e.g., a compressor and a turbine of the turbomachine to facilitate, e.g., a borescope inspection of the turbomachine. In such a manner, a dedicated turning motor is not required in order to facilitate borescope inspection of the turbomachine. Further, given a relatively large size of the electric energy storage unit in certain exemplary embodiments (discussed below), operating the hybrid electric propulsion system in the maintenance operation mode in such a manner is less likely to drain the electric energy storage unit of its electrical resources.

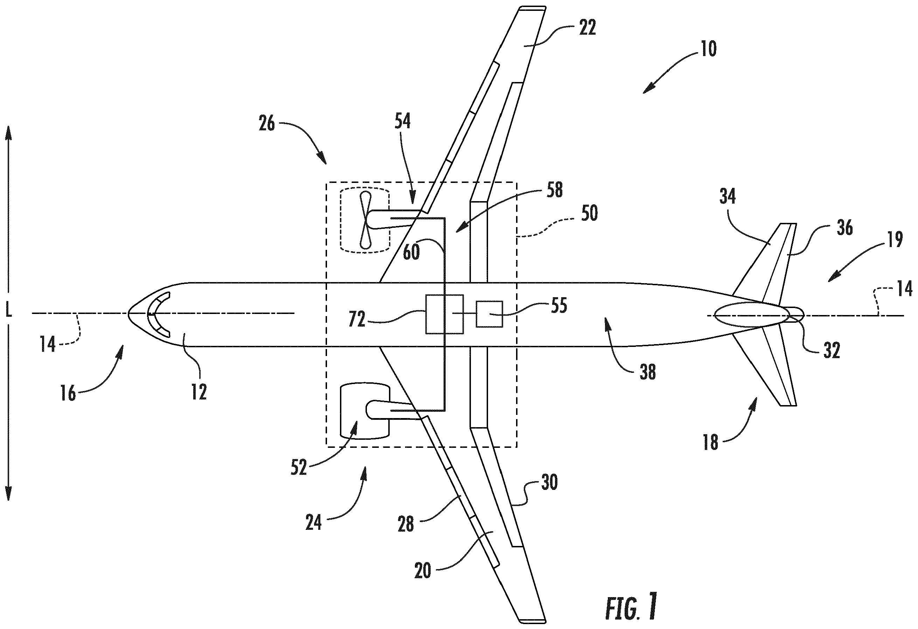

Referring now to the drawings, wherein identical numerals indicate the same elements throughout the figures, FIG. 1 provides a top view of an exemplary aircraft 10 as may incorporate various embodiments of the present disclosure. As shown in FIG. 1, the aircraft 10 defines a longitudinal centerline 14 that extends therethrough, a lateral direction L, a forward end 16, and an aft end 18. Moreover, the aircraft 10 includes a fuselage 12, extending longitudinally from the forward end 16 of the aircraft 10 to the aft end 18 of the aircraft 10, and an empennage 19 at the aft end of the aircraft 10. Additionally, the aircraft 10 includes a wing assembly including a first, port side wing 20 and a second, starboard side wing 22. The first and second wings 20, 22 each extend laterally outward with respect to the longitudinal centerline 14. The first wing 20 and a portion of the fuselage 12 together define a first side 24 of the aircraft 10, and the second wing 22 and another portion of the fuselage 12 together define a second side 26 of the aircraft 10. For the embodiment depicted, the first side 24 of the aircraft 10 is configured as the port side of the aircraft 10, and the second side 26 of the aircraft 10 is configured as the starboard side of the aircraft 10.

Each of the wings 20, 22 for the exemplary embodiment depicted includes one or more leading edge flaps 28 and one or more trailing edge flaps 30. The aircraft 10 further includes, or rather, the empennage 19 of the aircraft 10 includes, a vertical stabilizer 32 having a rudder flap (not shown) for yaw control, and a pair of horizontal stabilizers 34, each having an elevator flap 36 for pitch control. The fuselage 12 additionally includes an outer surface or skin 38. It should be appreciated however, that in other exemplary embodiments of the present disclosure, the aircraft 10 may additionally or alternatively include any other suitable configuration. For example, in other embodiments, the aircraft 10 may include any other configuration of stabilizer.

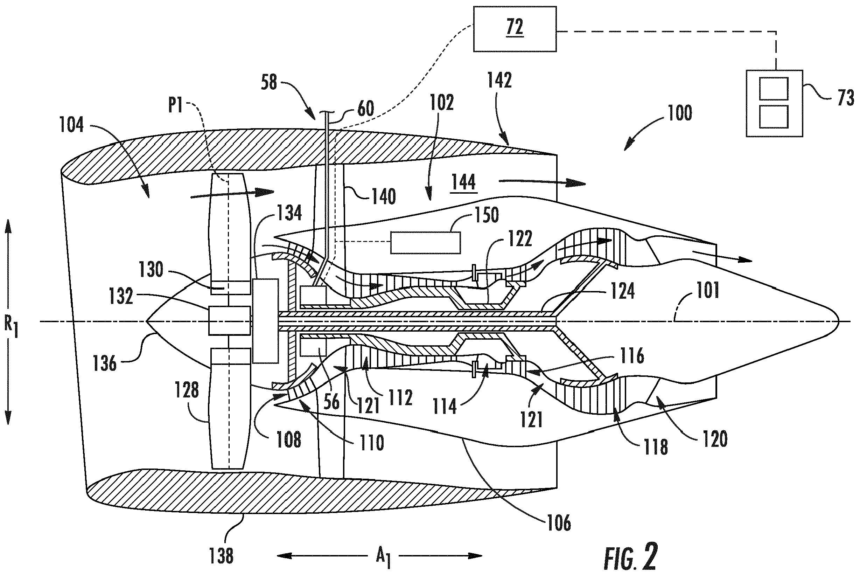

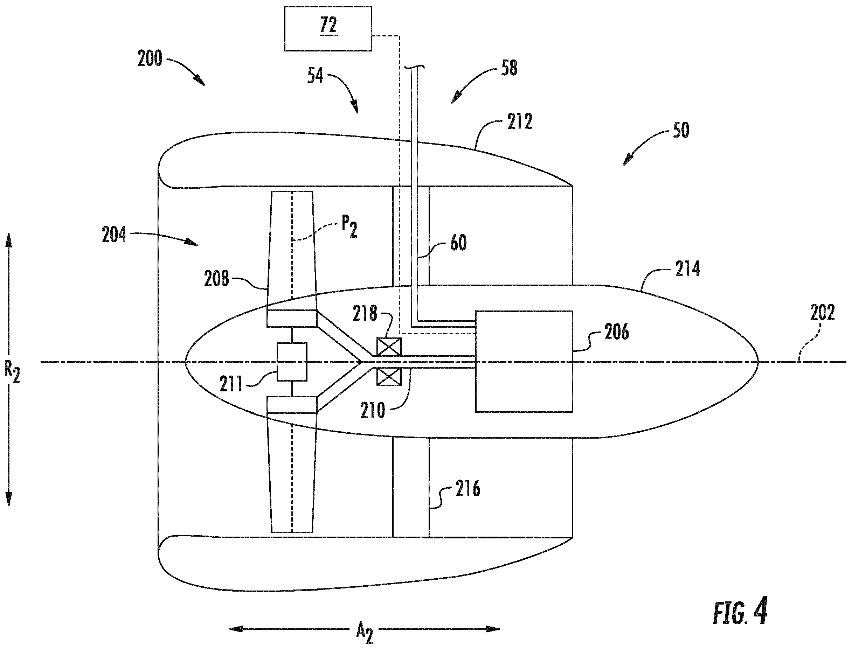

Referring now also to FIGS. 2 and 4, the exemplary aircraft 10 of FIG. 1 additionally includes a hybrid-electric propulsion system 50 having a first propulsor assembly 52 and a second propulsor assembly 54. FIG. 2 provides a schematic, cross-sectional view of the first propulsor assembly 52, and FIG. 4 provides a schematic, cross-sectional view of the second propulsor assembly 54. For the embodiment depicted, the first propulsor assembly 52 and second propulsor assembly 54 are each configured in an underwing-mounted configuration. However, as will be discussed below, one or both of the first and second propulsor assemblies 52, 54 may in other exemplary embodiments be mounted at any other suitable location.

Referring generally to FIGS. 1, 2, and 4, the exemplary hybrid-electric propulsion system 50 generally includes the first propulsor assembly 52 having a turbomachine and a prime propulsor (which, for the embodiment of FIG. 2 are configured together as a gas turbine engine, or rather as a turbofan engine 100), an electric machine 56 (which for the embodiment depicted in FIG. 2 is an electric motor/generator) drivingly coupled to the turbomachine, the second propulsor assembly 54 (which for the embodiment of FIG. 4 is configured as an electric propulsor assembly 200 electrically connectable to the electric machine 56), an electric energy storage unit 55, a controller 72, and a power bus 58.The electric propulsor assembly 200, the electric energy storage unit 55, and the electric machine 56 are each electrically connectable to one another through one or more electric lines 60 of the power bus 58. For example, the power bus 58 may include various switches or other power electronics movable to selectively electrically connect the various components of the hybrid electric propulsion system 50. Additionally, the power bus 58 may further include power electronics, such as inverters, converters, rectifiers, etc., for conditioning or converting electrical power within the hybrid electric propulsion system 50, and further for modifying an amount of electrical power provided to, or extracted from, various components within the hybrid electric propulsion system 50.

As will be appreciated, the controller 72 may be configured to distribute electrical power between the various components of the hybrid-electric propulsion system 50. For example, the controller 72 maybe operable with the power bus 58 (including the one or more switches or other power electronics) to provide electrical power to, or draw electrical power from, the various components, such as the electric machine 56 and electric energy storage unit 55, to operate the hybrid electric propulsion system 50 between various operating modes and perform various functions, as discussed in greater detail below. Such is depicted schematically as the electric lines 60 of the power bus 58 extending through the controller 72.

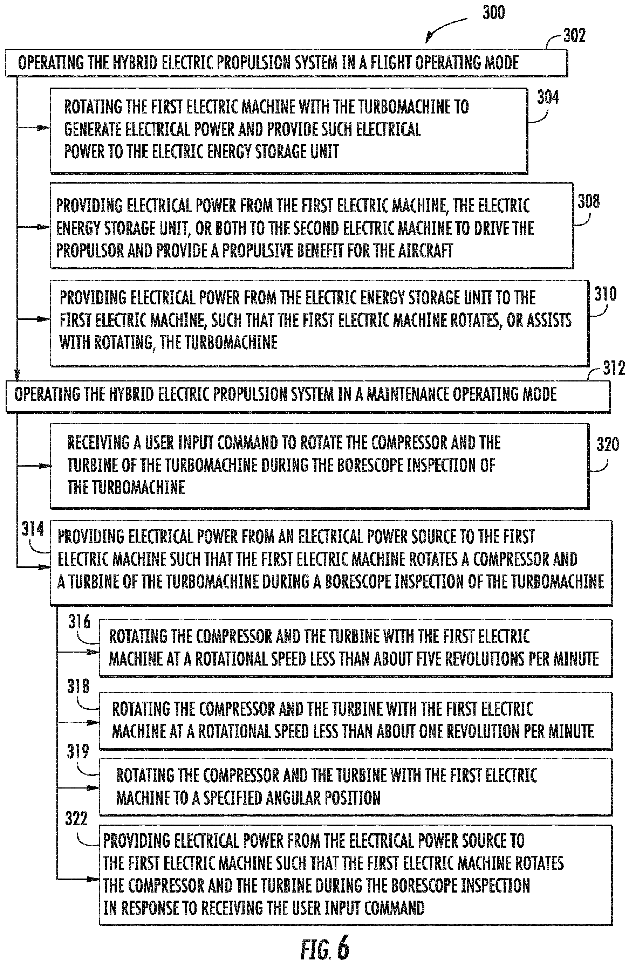

The controller 72 may be a stand-alone controller, dedicated to the hybrid-electric propulsion system 50, or alternatively, may be incorporated into one or more of a main system controller for the aircraft 10, a separate controller for the exemplary turbofan engine 100 (such as a full authority digital engine control system for the turbofan engine 100, also referred to as a FADEC), etc. For example, the controller 72 may be configured in substantially the same manner as the exemplary computing system 500 described below with reference to FIG. 6 (and may be configured to perform one or more of the functions of the exemplary method 300, described below).

Additionally, the electric energy storage unit 55 may be configured as one or more batteries, such as one or more lithium-ion batteries, or alternatively may be configured as any other suitable electrical energy storage devices. It will be appreciated that for the hybrid-electric propulsion system 50 described herein, the electric energy storage unit 55 is configured to store a relatively large amount of electrical power. For example, in certain exemplary embodiments, the electric energy storage unit may be configured to store at least about fifty kilowatt hours of electrical power, such as at least about sixty-five kilowatt hours of electrical power, such as at least about seventy-five kilowatts hours of electrical power, and up to about five hundred kilowatt hours of electrical power. Similarly, it will be appreciated that the electric machine 56 is a relatively large electric machine, configured to generate a relatively large amount of electrical power during at least certain operations. For example, in certain exemplary embodiments, the electric machine 56 may be capable of generating at least about fifty kilowatts of electrical power during operation of the gas turbine engine. More specifically, in certain exemplary embodiments, the electric machine 56 may be capable of generating at least about seventy-five kilowatts of electrical power during operation of the gas turbine engine, such as at least about one hundred kilowatts of electrical power during operation of the gas turbine engine such as up to about ten megawatt of electrical power during operation of the gas turbine engine.

Referring now particularly to FIGS. 1 and 2, the first propulsor assembly 52 includes a gas turbine engine mounted, or configured to be mounted, to the first wing 20 of the aircraft 10. More specifically, for the embodiment of FIG. 2, the gas turbine engine includes a turbomachine 102 and a prime propulsor, the prime propulsor being a fan (referred to as "fan 104" with reference to FIG. 2). Accordingly, for the embodiment of FIG. 2, the gas turbine engine is configured as a turbofan engine 100.

The turbofan engine 100 defines an axial direction A1 (extending parallel to a longitudinal centerline 101 provided for reference) and a radial direction R1. As stated, the turbofan engine 100 includes the fan 104 and the turbomachine 102 disposed downstream from the fan 104.

The exemplary turbomachine 102 depicted generally includes a substantially tubular outer casing 106 that defines an annular inlet 108. The outer casing 106 encases, in serial flow relationship, a compressor section including a booster or low pressure (LP) compressor 110 and a high pressure (HP) compressor 112; a combustion section 114; a turbine section including a first, high pressure (HP) turbine 116 and a second, low pressure (LP) turbine 118; and a jet exhaust nozzle section 120. The turbomachine 102, or rather the compressor section, combustion section 114, and turbine section of the turbomachine 102 together define at least in part a core air flowpath 121 through the turbomachine 102.

The exemplary turbomachine 102 of the turbofan engine 100 additionally includes one or more shafts rotatable with at least a portion of the turbine section and, for the embodiment depicted, at least a portion of the compressor section. More particularly, for the embodiment depicted, the turbofan engine 100 includes a high pressure (HP) shaft or spool 122, which is coupled to the HP turbine 116 and the HP compressor 112, and accordingly drivingly couples the HP turbine 116 to the HP compressor 112. Additionally, the exemplary turbofan engine 100 includes a low pressure (LP) shaft or spool 124, which is coupled to the LP turbine 118 and the LP compressor 110, and accordingly drivingly couples the LP turbine 118 to the LP compressor 110.

Further, the exemplary fan 104 depicted is configured as a variable pitch fan having a plurality of fan blades 128 coupled to a disk 130 in a spaced apart manner. The fan blades 128 extend outwardly from disk 130 generally along the radial direction R1. Each fan blade 128 is rotatable relative to the disk 130 about a respective pitch axis P1 by virtue of the fan blades 128 being operatively coupled to a suitable actuation member 132 configured to collectively vary the pitch of the fan blades 128. The fan 104 is mechanically coupled to the LP shaft 124, such that the fan 104 is mechanically driven by the second, LP turbine 118. More particularly, the fan 104, including the fan blades 128, disk 130, and actuation member 132, is mechanically coupled to the LP shaft 124 through a power gearbox 134, and is rotatable about the longitudinal axis 101 by the LP shaft 124 across the power gear box 134. The power gear box 134 includes a plurality of gears for stepping down the rotational speed of the LP shaft 124 to a more efficient rotational fan speed. Accordingly, the fan 104 is powered by an LP system (including the LP turbine 118) of the turbomachine 102.

Referring still to the exemplary embodiment of FIG. 2, the disk 130 is covered by rotatable front hub 136 aerodynamically contoured to promote an airflow through the plurality of fan blades 128. Additionally, the turbofan engine 100 includes an annular fan casing or outer nacelle 138 that circumferentially surrounds the fan 104 and/or at least a portion of the turbomachine 102. Accordingly, the exemplary turbofan engine 100 depicted may be referred to as a "ducted" turbofan engine. Moreover, the nacelle 138 is supported relative to the turbomachine 102 by a plurality of circumferentially-spaced outlet guide vanes 140. A downstream section 142 of the nacelle 138 extends over an outer portion of the turbomachine 102 so as to define a bypass airflow passage 144 therebetween.

During operation of the turbofan engine 100, it will be appreciated that air provided through the inlet 108 to the LP compressor 110 is generally sequentially compressed by the LP compressor 110 and HP compressor 112. More specifically, the air is compressed through rotation of a plurality of stages of LP compressor rotor blades within the LP compressor 110 and HP compressor rotor blades within the HP compressor 112. Stages of stator vanes may be positioned between the various stages of LP compressor rotor blades and HP compressor rotor blades to increase an efficiency of these compressors. The compressed air from the compressor section and is then provided to the combustion section 114, where such compressed air is combined with fuel and ignited to generate combustion gases. The combustion gases flow through the HP turbine 116, driving the HP turbine 116, and subsequently through the LP turbine 118, driving the LP turbine 118. Similar to the compressors, the HP turbine 116 includes one or more stages of HP turbine rotor blades and the LP turbine 118 includes one or more stages of LP turbine rotor blades. Stages of stator vanes may be positioned between the various stages of LP turbine rotor blades and HP turbine rotor blades to increase an efficiency of these or turbines.

Through many operating cycles, certain components within the turbomachine 102 may be susceptible to wear or damage. In order to assess whether or not certain components within, e.g., the compressor section or turbine section have prematurely worn or are damaged, the turbomachine 102 defines a plurality of borescope holes to facilitate a borescope inspection during a maintenance operation of the hybrid electric propulsion system 50, or more specifically, during a maintenance operation of the turbomachine 102. These borescope holes may be defined throughout the compressor section and the turbine section, such that borescope inspections may be performed within the LP compressor 110 to inspect LP compressor rotor blades and stator vanes, within the HP compressor 112 to inspect HP compressor rotor blades and stator vanes, within the HP turbine 116 to inspect HP turbine rotor blades and stator vanes, and within the LP turbine 118 to inspect LP turbine rotor blades and stator vanes. Other components may be inspected as well.

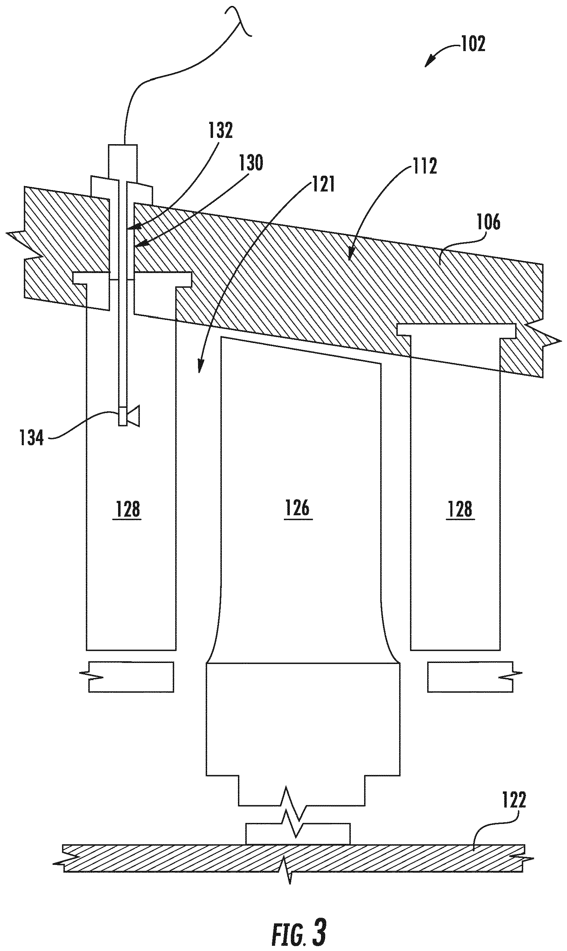

For example, referring now briefly to FIG. 3, a close-up view is provided of a section of the exemplary HP compressor 112 of the exemplary turbofan engine 100 of FIG. 2.

As is depicted, and as previously discussed above, the HP compressor 112 includes one or more stages of HP compressor rotor blades 126, as well as one or more stages of HP compressor stator vanes 128. As will be appreciated, the one or more stages of HP compressor rotor blades 126 are mechanically coupled to the HP shaft 122, such that rotation of the HP shaft 122 correspondingly rotates the HP compressor rotor blades 126. By contrast, each of the plurality of HP compressor stator vanes 128 remain substantially stationary relative to the outer casing 106.

Further, as is depicted the turbofan engine 100 defines one or more borescope holes 130. More specifically, the outer casing 106 of the turbomachine 102 defines the one or more borescope holes 130. As is also depicted, the view of FIG. 3 is of the HP compressor 112 during a borescope inspection of the turbofan engine 100, and more specifically of the HP compressor 112 of the turbomachine 102. For example, in the embodiment depicted, a borescope inspection tool 132 is provided, extending through the borescope hole 130 in the casing 106. As is depicted, the borescope inspection tool 132, for the embodiment depicted, extends into the core air flowpath 121 at one of the stages of the HP compressor stator vanes 128, and includes a camera 134 at a distal end to facilitate viewing of various components within the HP compressor 112. For example, the borescope inspection tool 132 may allow a user to view various of the plurality of HP compressor rotor blades 126. Notably, in order to view each of the HP compressor rotor blades 126 in the particular stage depicted, the hybrid electric propulsion system 50 may be configured to rotate the HP compressor 112 during the maintenance operating mode to facilitate such inspection. As will be discussed in greater detail below, the hybrid electric propulsion system 50 may be configured to rotate the HP compressor 114, as well as the HP turbine 116, using the electric machine 56 during such maintenance operation mode.

Notably, referring back to FIG. 2, the exemplary hybrid electric propulsion system 50 further includes a remote control 73 operably connected to the controller 72 of the hybrid electric propulsion system. The remote control 73 may allow a user, or operator, to send signals to the controller 72, initiating rotation of, e.g., the HP compressor 112 and HP turbine 116 during a maintenance operation mode, or more specifically, during a borescope inspection of the turbomachine 102. The remote control 73 may be any suitable remote control for providing signals from an operator to the controller 72. For example, the remote control 73 may be a separate remote control dedicated to providing signals to the controller 72 during the maintenance operation mode and having a wired connection, or alternatively having a wireless connection, to the controller 72. Alternatively, the remote control 73 may be integrated into some other control unit or computing device. For example, the remote control 73 may be integrated into the aircraft controls within a cockpit, or may be integrated into a personal, handheld computing device, such as a smart phone or tablet.

Referring still to FIG. 2, as stated, the hybrid-electric propulsion system 50 additionally includes the electric machine 56, which for the embodiment depicted is configured as an electric motor/generator. The electric machine 56 is, for the embodiment depicted, positioned within the turbomachine 102 of the turbofan engine 100, inward of the core air flowpath 121, and is in mechanical communication with one of the shafts of the turbofan engine 100. More specifically, for the embodiment depicted, the electric machine is driven by the first, HP turbine 116 through the HP shaft 122. The electric machine 56 may be configured to convert mechanical power of the HP shaft 122 to electrical power, or alternatively the electric machine 56 may be configured to convert electrical power provided thereto into mechanical power for the HP shaft 122.

It should be appreciated, however, that in other exemplary embodiments, the electric machine 56 may instead be positioned at any other suitable location within the turbomachine 102 or elsewhere. For example, the electric machine 56 may be, in other embodiments, mounted coaxially with the HP shaft 122 within the turbine section, or alternatively may be offset from the HP shaft 122 and driven through a suitable gear train. Additionally, or alternatively, in other exemplary embodiments, the electric machine 56 may instead be powered by the LP system, i.e., by the LP turbine 118 through, e.g., the LP shaft 124, or by both the LP system (e.g., the LP shaft 124) and the HP system (e.g., the HP shaft 122) via a dual drive system. Additionally, or alternatively, still, in other embodiments, the electric machine 56 may include a plurality of electric machines, e.g., with one being drivingly connected to the LP system (e.g., the LP shaft 124) and one being drivingly connected to the HP system (e.g., the HP shaft 122). Further, although the electric machine 56 is described as an electric motor/generator, in other exemplary embodiments, the electric machine 56 may be configured solely as an electric motor, or solely as an electric generator.

Referring still to FIGS. 1 and 2, the turbofan engine 100 further includes a controller 150 and a plurality of sensors (not shown). The controller 150 may be a full authority digital engine control system, also referred to as a FADEC. The controller 150 of the turbofan engine 100 may be configured to control operation of, e.g., the actuation member 132, the fuel delivery system, etc. Additionally, referring back also to FIG. 1, the controller 150 of the turbofan engine 100 is operably connected to the controller 72 of the hybrid-electric propulsion system 50. Moreover, as will be appreciated, the controller 72 may further be operably connected to one or more of the first propulsor assembly 52 (including controller 150), the electric machine 56, the second propulsor assembly 54, and the energy storage unit 55 through a suitable wired or wireless communication system (depicted in phantom).

It should further be appreciated that the exemplary turbofan engine 100 depicted in FIG. 2 may, in other exemplary embodiments, have any other suitable configuration. For example, in other exemplary embodiments, the fan 104 may not be a variable pitch fan, and further, in other exemplary embodiments, the LP shaft 124 may be directly mechanically coupled to the fan 104 (i.e., the turbofan engine 100 may not include the gearbox 134). Further, it should be appreciated that in other exemplary embodiments, the turbofan engine 100 may be configured as any other suitable gas turbine engine. For example, in other embodiments, the turbofan engine 100 may instead be configured as a turboprop engine, an unducted turbofan engine, a turbojet engine, a turboshaft engine, etc. Additionally, although the controller 72 is depicted as being separate from the controller 150 of the gas turbine engine, in other exemplary embodiments, these controllers may instead be the same device, or alternatively may be separated into additional devices.

Referring now particularly to FIGS. 1 and 4, as previously stated the exemplary hybrid-electric propulsion system 50 additionally includes the second propulsor assembly 54 mounted, for the embodiment depicted, to the second wing 22 of the aircraft 10. Referring particularly to FIG. 4, the second propulsor assembly 54 is generally configured as an electric propulsor assembly 200 including an electric motor 206 and a propulsor/fan 204. The electric propulsor assembly 200 defines an axial direction A2 extending along a longitudinal centerline axis 202 that extends therethrough for reference, as well as a radial direction R2. For the embodiment depicted, the fan 204 is rotatable about the centerline axis 202 by the electric motor 206.

The fan 204 includes a plurality of fan blades 208 and a fan shaft 210. The plurality of fan blades 208 are attached to/rotatable with the fan shaft 210 and spaced generally along a circumferential direction of the electric propulsor assembly 200 (not shown). In certain exemplary embodiments, the plurality of fan blades 208 may be attached in a fixed manner to the fan shaft 210, or alternatively, the plurality of fan blades 208 may be rotatable relative to the fan shaft 210, such as in the embodiment depicted. For example, the plurality of fan blades 208 each define a respective pitch axis P2, and for the embodiment depicted are attached to the fan shaft 210 such that a pitch of each of the plurality of fan blades 208 may be changed, e.g., in unison, by a pitch change mechanism 211. Changing the pitch of the plurality of fan blades 208 may increase an efficiency of the second propulsor assembly 54 and/or may allow the second propulsor assembly 54 to achieve a desired thrust profile. With such an exemplary embodiment, the fan 204 may be referred to as a variable pitch fan.

Moreover, for the embodiment depicted, the electric propulsor assembly 200 depicted additionally includes a fan casing or outer nacelle 212, attached to a core 214 of the electric propulsor assembly 200 through one or more struts or outlet guide vanes 216. For the embodiment depicted, the outer nacelle 212 substantially completely surrounds the fan 204, and particularly the plurality of fan blades 208. Accordingly, for the embodiment depicted, the electric propulsor assembly 200 may be referred to as a ducted electric fan.

Referring still particularly to FIG. 4, the fan shaft 210 is mechanically coupled to the electric motor 206 within the core 214, such that the electric motor 206 drives the fan 204 through the fan shaft 210. The fan shaft 210 is supported by one or more bearings 218, such as one or more roller bearings, ball bearings, or any other suitable bearings. Additionally, the electric motor 206 may be an inrunner electric motor (i.e., including a rotor positioned radially inward of a stator), or alternatively may be an outrunner electric motor (i.e., including a stator positioned radially inward of a rotor), or alternatively, still, may be an axial flux electric motor (i.e., with the rotor neither outside the stator nor inside the stator, but rather offset from it along the axis of the electric motor).

As briefly noted above, the electrical power source (e.g., the electric machine 56 or the electric energy storage unit 55) is electrically connected with the electric propulsor assembly 200 (i.e., the electric motor 206) for providing electrical power to the electric propulsor assembly 200. More particularly, the electric motor 206 is in electrical communication with the electric machine 56 and/or the electric energy storage unit 55 through the electrical power bus 58, and more particularly through the one or more electrical cables or lines 60 extending therebetween.

It should be appreciated, however, that in other exemplary embodiments the exemplary hybrid-electric propulsion system 50 may have any other suitable configuration, and further, may be integrated into an aircraft 10 in any other suitable manner. For example, in other exemplary embodiments, the electric propulsor assembly 200 of the hybrid electric propulsion system 50 may instead be configured as a plurality of electric propulsor assemblies 200 and/or the hybrid electric propulsion system 50 may further include a plurality of gas turbine engines (such as turbofan engine 100) and electric machines 56. Further, in other exemplary embodiments, the electric propulsor assembly(ies) 200 and/or gas turbine engine(s) and electric machine(s) 56 may be mounted to the aircraft 10 at any other suitable location in any other suitable manner (including, e.g., tail mounted configurations). For example, in such an exemplary embodiment, the electric propulsor assembly may be configured to ingest boundary layer air and reenergize such boundary layer air to provide a propulsive benefit for the aircraft (the propulsive benefit may be thrust, or may simply be an increase in overall net thrust for the aircraft by reducing a drag on the aircraft).

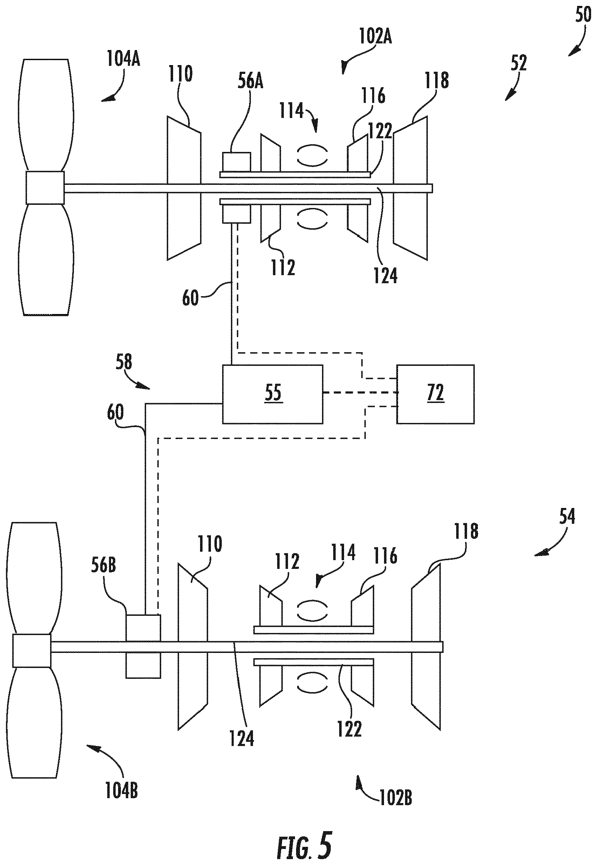

Moreover, in still other exemplary embodiments, the exemplary hybrid electric propulsion system 50 may have still other configurations. For example, in other exemplary embodiments, the hybrid electric propulsion system 50 may not include a "pure" electric propulsor assembly. For example, referring now briefly to FIG. 5, a schematic diagram of a hybrid-electric propulsion system 50 in accordance with yet another exemplary embodiment of the present disclosure is provided. The exemplary hybrid electric system hybrid electric propulsion system 50 depicted in FIG. 5 may be similar to one or more the exemplary hybrid electric propulsion systems 50 described above with reference to FIGS. 1 through 3.

For example, the exemplary hybrid-electric propulsion system 50 of FIG. 5 generally includes a first propulsor assembly 52 and a second propulsor assembly 54. The first propulsor assembly generally includes a first turbomachine 102A and a first propulsor 104A, and similarly, the second propulsor assembly 54 generally includes a second turbomachine 102B and a second propulsor 104B. Each of the first and second turbomachines 102A, 102B generally includes a low pressure system having a low pressure compressor 110 drivingly coupled to a low pressure turbine 118 through a low pressure shaft 124, as well as a high pressure system having a high pressure compressor 112 drivingly coupled to a high pressure turbine 116 through a high pressure shaft 122. Additionally, the first propulsor 104A is drivingly coupled to the low pressure system of the first turbomachine 102A and the second propulsor 104B is drivingly coupled to the low pressure system of the second turbomachine 102B. In certain exemplary embodiments, the first propulsor 104A and first turbomachine 102A may be configured as a first turbofan engine and similarly, the second propulsor 104B and second turbomachine 102B may be configured as a second turbofan engine. Alternatively, however, these components may instead be configured as parts of a turboprop engine or any other suitable turbomachine-driven propulsion device. Further, in certain exemplary embodiments, the first propulsor assembly 52 may be mounted to a first wing of an aircraft and the second propulsor assembly 54 may be mounted to a second wing of the aircraft (similar, e.g., to the exemplary embodiment of FIG 1). Of course, in other exemplary embodiments, any other suitable configuration may be provided (e.g., both may be mounted to the same wing, one or both may be mounted to a tail of the aircraft, etc.).

Moreover, the hybrid electric propulsion system 50 of FIG. 6 additionally includes an electrical system. The electrical system includes a first electric machine 56A, a second electric machine 56B, and an electric energy storage unit 55 electrically connectable to the first electric machine 56A and second electric machine 56B. The first electric machine 56A is additionally coupled to the first turbomachine 102A. More specifically, for the embodiment depicted, the first electric machine 56A is coupled to the high pressure system of the first turbomachine 102A, and more specifically still, is coupled to the high-pressure spool 122 of the first turbomachine 102A. In such a manner, the first electric machine 56A may extract power from the high pressure system of the first turbomachine 102A and/or provide power to the high-pressure system of the first turbomachine 102A.

By contrast to the exemplary embodiments discussed above, however, the second propulsor assembly 54 is not configured as a pure electric propulsor assembly. Instead, the second propulsor assembly 54 is configured as part of a hybrid electric propulsor. More particularly, the second electric machine 56B is coupled to the second propulsor 104B, and is further coupled to the low pressure system of the second turbomachine 102B. In such a manner, the second electric machine 56B may extract power from the low pressure system of the second turbomachine 102B and/or provide power to the low pressure system of the first turbomachine 102A. More particularly, in certain exemplary aspects, the second electric machine 56 may drive, or assist with driving the second propulsor 104B.

As is also depicted in FIG. 6, the exemplary hybrid electric propulsion system 50 further includes a controller 72 and a power bus 58. The first electric machine 56A, the second electric machine 56B, and the electric energy storage unit 55 are each electrically connectable to one another through one or more electric lines 60 of the power bus 58. For example, the power bus 58 may include various switches or other power electronics movable to selectively electrically connect the various components of the hybrid electric propulsion system 50, and optionally to convert or condition such electrical power transferred therethrough.

Furthermore, it should be appreciated that in still other exemplary embodiments, the exemplary hybrid electric propulsion system 50 may have other suitable configurations. For example, although the exemplary embodiment of FIG. 6 includes a first electric machine 56A coupled to the high-pressure system of the first turbomachine 102A and the second electric machine 56B coupled to the low pressure system of the second turbomachine 102B, in other exemplary embodiments, each of the electric machines 56A, 56B may be coupled to the low pressure system, or alternatively may be coupled to the high-pressure system. Alternatively, in other exemplary embodiments the electrical system may further include an additional electric machine coupled to the low pressure system of the first turbomachine 102A and an additional electric machine coupled to the high-pressure system of the second turbomachine 102B.

Referring now to FIG. 6, a method 300 for operating a hybrid electric propulsion system of an aircraft in accordance with an exemplary aspect of the present disclosure is provided. The exemplary hybrid electric propulsion system may be configured in accordance with one or more the exemplary hybrid electric propulsion systems described above with reference to FIGS. 1 through 5. Accordingly, the exemplary hybrid electric propulsion system may generally include a propulsor, a turbomachine, and an electrical system, the electrical system including a first electric machine coupled to the turbomachine, a second electric machine coupled to the propulsor, and an electric energy storage unit.

The method 300 generally includes at (302) operating the hybrid electric propulsion system in a flight operating mode. For the aspect depicted, operating the hybrid electric propulsion system in the flight operating mode at (302) includes at (304) rotating the first electric machine with the turbomachine to generate electrical power and provide such electrical power to the electric energy storage unit, and at (308) providing electrical power from the first electric machine, the electric energy storage unit, or both to the second electric machine to drive the propulsor and provide a propulsive benefit for the aircraft. The propulsive benefit may be thrust, or alternatively may be a reduction in drag of the aircraft (e.g., when the second electric machine and propulsor are configured as part of a boundary layer ingestion electric fan mounted, e.g., to a tail end of the aircraft).

In certain exemplary aspects, the turbomachine may be configured as part of a turbofan engine (or turboprop engine, or other suitable gas turbine engine) further including a prime propulsor (which may be a second propulsor, or may be the above-mentioned propulsor). Although not depicted, with such an exemplary aspect, operating the hybrid electric propulsion system in the flight operating mode at (302) may further include driving the prime propulsor, such as a fan, with the turbomachine to generate thrust for and aircraft within which the hybrid electric propulsion system is installed.

In such a manner, during the flight operation mode, the exemplary hybrid electric propulsion system may provide a desired amount of thrust for the aircraft within which the hybrid electric propulsion system is installed. More specifically, in such a manner, the exemplary hybrid electric propulsion system may provide a desired amount of thrust for the aircraft by driving the turbomachine, and using the turbomachine to further create electrical power with the first electric machine which, in turn, may drive the second electric machine and the propulsor. Notably, the second electric machine and propulsor may be configured together as an electric propulsor assembly, as part of a second gas turbine engine (e.g., turbofan engine, turboprop engine, etc.), or in any other suitable manner.

Further, for the exemplary aspect depicted, operating the hybrid electric propulsion system in the flight operating mode at (302) further includes at (310) providing electrical power from the electric energy storage unit to the first electric machine, such that the first electric machine rotates, or assists with rotating, the turbomachine. Providing electrical power from the electric energy storage unit to the first electric machine at (310) may occur prior to, or subsequent to, rotating the first electric machine with the turbomachine at (304). For example, during certain flight phases, wherein for example a maximum amount of output power is desired, the hybrid electric propulsion system may direct electrical power from the electric energy storage unit to the first electric machine to increase an effective output power of the turbomachine.

Referring still to FIG. 6, subsequent to, or prior to, operating the hybrid electric propulsion system in the flight operating mode at (302), the method 300 includes at (312) operating the hybrid electric propulsion system in a maintenance operating mode. For the exemplary aspect depicted, operating the hybrid electric propulsion system in the maintenance operating mode at (312) includes at (314) providing electrical power from an electrical power source to the first electric machine such that the first electric machine rotates a compressor and a turbine of the turbomachine during a borescope inspection of the turbomachine. In certain exemplary aspect, the electrical power source may be the electric energy storage unit. However, in other exemplary aspects, the electrical power source may be any other suitable source of electrical power, such as a ground power source (e.g., an electrical connection with a local electrical power grid), an auxiliary power unit of the aircraft, the first electric machine, etc.

As will be appreciated, providing electrical power from the electrical power source to the first electric machine such that the first electric machine rotates the compressor and the turbine of the turbomachine during a borescope inspection at (314) may generally include rotating the compressor and the turbine at a relatively low rotational speed to facilitate such borescope inspection. More specifically, for the exemplary aspect of the method 300 depicted in FIG. 6, providing electrical power from the electrical power source to the first electric machine such that the first electric machine rotates the compressor and the turbine of the turbomachine during a borescope inspection at (314) includes at (316) rotating the compressor and the turbine with the first electric machine at a rotational speed less than about five revolutions per minute, and at (318) rotating the compressor and the turbine with the first electric machine at a rotational speed less than about one revolution per minute. Additionally, or alternatively, as is depicted in phantom, in certain exemplary aspects, providing electrical power from the electrical power source to the first electric machine such that the first electric machine rotates the compressor and the turbine of the turbomachine during a borescope inspection at (314) may include at (319) rotating the compressor and the turbine with the first electric machine to a specified angular position. For example, the method 300 may include receiving a user input command for a desired/ specified angular position (e.g., "91.5 degrees") of one or both of the compressor and the turbine, and in response may rotate the compressor and the turbine with the first electric machine to the specified angular position (i.e., 91.5 degrees for the example given).

Notably, rotating the compressor and the turbine of the first electric machine at such rotational speeds may not need much electrical power from the electric energy storage unit. Accordingly, in certain exemplary aspects, providing electrical power from the electrical power source to the first electric machine such that the first electric machine rotates the compressor and the turbine of the turbomachine during a borescope inspection at (314) may include providing an amount of electrical power less than about ten percent of an amount of electrical power provided from the electric energy storage unit to the first electric machine at (310). More specifically, in certain exemplary aspects, providing electrical power from the electrical power source to the first electric machine during a borescope inspection at (314) may include providing an amount of electrical power less than about five percent of an amount of electrical power provided from the electric energy storage unit to the first electric machine at (310). Notably, the same applies to electrical energy, as may be measured in watt-hours, provided from the electrical power source to first electric machine. For example, in certain exemplary aspects, providing electrical energy from the electrical power source to the first electric machine during a borescope inspection may include providing an amount of electrical energy less than about five percent of an amount of electrical energy provided from the electric energy storage unit to the first electric machine at (310).

Further, in certain exemplary aspects, the hybrid electric propulsion system may further include a remote control operably connected to, e.g., a controller of the hybrid electric propulsion system. With such an exemplary aspect, operating the hybrid electric propulsion system in the maintenance operating mode at (312) further includes at (320) receiving a user input command to rotate the compressor and the turbine of the turbomachine during the borescope inspection of the turbomachine. Notably, as is depicted, with such an exemplary aspect, providing electrical power from the electrical power source to the first electric machine such that the first electric machine rotates the compressor and the turbine during a borescope inspection at (314) further includes at (322) providing electrical power from the electrical power source unit to the first electric machine such that the first electric machine rotates the compressor and the turbine during the borescope inspection in response to receiving the user input command at (320). In such a manner, a user, or maintenance personnel, performing the borescope inspection may control rotation of the compressor and turbine of the turbomachine during the borescope inspection to facilitate a more efficient and complete borescope inspection.

It will be appreciated, in certain exemplary aspects, the turbine may be a high pressure turbine, the compressor may be high pressure compressor, and the turbomachine may further include a spool, or rather a high pressure spool, coupling the high pressure compressor and high pressure turbine. The first electric machine may be coupled to the high pressure compressor, the high pressure spool, and the high pressure turbine (i.e., directly, or indirectly, coupled). Accordingly, with such an exemplary aspect, the method 300 may be utilized to perform a borescope inspection of one or more of the high pressure compressor and high pressure turbine of the turbomachine. Notably, however, in other exemplary aspects, the turbomachine may further include a low pressure turbine, low pressure compressor, and a low pressure shaft coupling the low pressure compressor and a low pressure turbine. With such an exemplary embodiment, the first electric machine may additionally, or alternatively, be coupled to the low pressure compressor, the low pressure turbine, and the low pressure shaft. With such an exemplary aspect, the method 300 may be utilized to perform a borescope inspection of one or more of the low pressure compressor and low pressure turbine. Further, in still other exemplary embodiments, the turbine may be any other suitable turbine and the compressor may be any other suitable compressor. For example, in other exemplary aspects the turbomachine may include three turbines, the first electric machine may be coupled to the third turbine, and the method 300 may be utilized to perform a borescope inspection of the third turbine (and a third compressor, if included).

Operating hybrid electric propulsion system in accordance with such an exemplary aspect may allow for performance of a borescope inspection without requiring a dedicated turning motor and associated mounting provisions included in the engine, and instead may utilize existing components of the hybrid electric propulsion system and a novel manner. Such may lead to a lighter, more fuel-efficient, and more cost-efficient hybrid electric propulsion system for an aircraft.

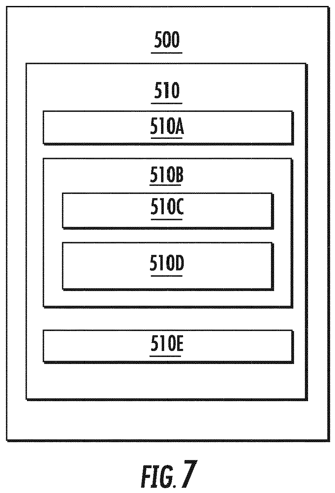

Referring now to FIG. 7, an example computing system 500 according to example embodiments of the present disclosure is depicted. The computing system 500 can be used, for example, as a controller 72 in a hybrid electric propulsion system 50. The computing system 500 can include one or more computing device(s) 510. The computing device(s) 510 can include one or more processor(s) 510A and one or more memory device(s) 510B. The one or more processor(s) 510A can include any suitable processing device, such as a microprocessor, microcontroller, integrated circuit, logic device, and/or other suitable processing device. The one or more memory device(s) 510B can include one or more computer-readable media, including, but not limited to, non-transitory computer-readable media, RAM, ROM, hard drives, flash drives, and/or other memory devices.

The one or more memory device(s) 510B can store information accessible by the one or more processor(s) 510A, including computer-readable instructions 510C that can be executed by the one or more processor(s) 510A. The instructions 510C can be any set of instructions that when executed by the one or more processor(s) 510A, cause the one or more processor(s) 510A to perform operations. In some embodiments, the instructions 510C can be executed by the one or more processor(s) 510A to cause the one or more processor(s) 510A to perform operations, such as any of the operations and functions for which the computing system 500 and/or the computing device(s) 510 are configured, the operations for operating a hybrid electric propulsion system (e.g, method 300), as described herein, and/or any other operations or functions of the one or more computing device(s) 510. Accordingly, the method 300 may be a computer-implemented method, such that each of the steps of the exemplary method 300 are performed by one or more computing devices, such as the exemplary computing device 510 of the computing system 500. The instructions 510C can be software written in any suitable programming language or can be implemented in hardware. Additionally, and/or alternatively, the instructions 510C can be executed in logically and/or virtually separate threads on processor(s) 510A. The memory device(s) 510B can further store data 510D that can be accessed by the processor(s) 510A. For example, the data 510D can include data indicative of power flows, data indicative of power demands of various loads in a hybrid electric propulsion system, data indicative of operational parameters of the hybrid electric propulsion system, including of a turbomachine of the hybrid electric propulsion system, data indicative of a maintenance operation of the hybrid electric propulsion system, data indicative of an operation mode of the hybrid electric propulsion system, including of a turbomachine of the hybrid electric propulsion system, etc.

The computing device(s) 510 can also include a network interface 510E used to communicate, for example, with the other components of system 500 (e.g., via a network). The network interface 510E can include any suitable components for interfacing with one or more network(s), including for example, transmitters, receivers, ports, controllers, antennas, and/or other suitable components. One or more external devices such as an external remote control, can be configured to receive one or more commands from the computing device(s) 510 or provide one or more commands to the computing device(s) 510.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are disclosed in the following numbered clauses. Any features of any of the aspects and/or embodiments may be readily combined with one or more features of any other aspect or embodiment described herein.
1. A method for operating a hybrid-electric propulsion system of an aircraft, the hybrid-electric propulsion system comprising a propulsor, a turbomachine, and an electrical system, the electrical system comprising a first electric machine coupled to the turbomachine and an electric energy storage unit, the method comprising:
   operating the hybrid electric propulsion system in a flight operation mode, wherein operating the hybrid electric propulsion system in the flight operation mode comprises rotating the first electric machine with the turbomachine to generate electrical power and provide at least a portion of such electrical power to the electric energy storage unit; and
   operating the hybrid electric propulsion system in a maintenance operation mode, wherein operating the hybrid electric propulsion system in the maintenance operation mode comprises providing electrical power from an electrical power source to the first electric machine such that the first electric machine rotates a compressor and a turbine of the turbomachine during a borescope inspection of the turbomachine.
2. The method of clause 1, wherein the hybrid electric propulsion system further comprises a propulsor, wherein the electrical system further comprises a second electric machine coupled to the propulsor, and wherein operating the hybrid electric propulsion system in the flight operation mode further comprises providing electrical power from the first electric machine, the electric energy storage unit, or both to the second electric machine to drive the propulsor and provide a propulsive benefit for the aircraft.
3. The method of clause 1 or 2, wherein providing electrical power from the electrical power source to the first electric machine such that the first electric machine rotates the compressor and the turbine of the turbomachine during the borescope inspection comprises rotating the compressor and the turbine with the first electric machine at a rotational speed less than about five revolutions per minute.
4. The method of any preceding clause, wherein providing electrical power from the electrical power source to the first electric machine such that the first electric machine rotates the compressor and the turbine of the turbomachine during the borescope inspection comprises rotating the compressor and the turbine with the first electric machine at a rotational speed less than about one revolution per minute.
5. The method of any preceding clause, wherein operating the hybrid electric propulsion system in the maintenance operation mode further comprises receiving a user input command to rotate the compressor and the turbine of the turbomachine during the borescope inspection of the turbomachine, and wherein providing electrical power from the electrical power source to the first electric machine such that the first electric machine rotates the compressor and the turbine during the borescope inspection comprises providing electrical power from the electrical power source to the first electric machine such that the first electric machine rotates the compressor and the turbine during the borescope inspection in response to receiving the user input command.
6. The method of any preceding clause, wherein the turbomachine defines a core air flowpath and further comprises a spool coupling the compressor and the turbine, and wherein the first electric machine is mechanically coupled to, and rotatable with, the compressor, the turbine, and the spool at a location inward of the core air flowpath.
7. The method of any preceding clause, wherein the turbine is a high pressure turbine, wherein the compressor is a high pressure compressor, wherein the spool is a high pressure spool, and wherein the turbomachine further comprises a low pressure turbine, a low pressure compressor, and a low pressure shaft coupling the low pressure compressor and the low pressure turbine.
8. The method of any preceding clause, wherein operating the hybrid electric propulsion system in the flight operation mode further comprises providing electrical power from the electric energy storage unit to the first electric machine such that the first electric machine rotates, or assists with rotating, the turbomachine.
9. The method of any preceding clause, wherein rotating the first electric machine with the turbomachine to generate electrical power comprises generating at least about fifty kilowatts of electrical power.
10. The method of any preceding clause, wherein electric energy storage unit is configured to store at least about fifty kilowatt-hours of electrical power.
11. The method of any preceding clause, wherein the electrical power source is the electric energy storage unit.
12. The method of any preceding clause, wherein providing electrical power from the electrical power source to the first electric machine such that the first electric machine rotates the compressor and the turbine of the turbomachine during the borescope inspection comprises rotating the compressor and the turbine with the first electric machine to a specified angular position.
13. A hybrid-electric propulsion system comprising:
   a propulsor;
   a turbomachine;
   an electrical system comprising a first electric machine, a second electric machine, and an electric energy storage unit electrically connectable the first and second electric machines, the first electric machine coupled to the turbomachine and the second electric machine coupled to the propulsor for driving the propulsor to provide a propulsive benefit for the aircraft; and
   a controller configured to provide electrical power from the electric energy storage unit to the first electric machine such that the first electric machine rotates the compressor and the turbine of the turbomachine during a borescope inspection of the turbomachine.
14. The hybrid-electric propulsion system of clause 13, wherein the controller is configured to rotate the compressor and turbine of the turbomachine at a rotational speed less than five revolutions per minute during the borescope inspection of the turbomachine.
15. The hybrid-electric propulsion system of clause 13 or 14, further comprising:
   a remote control operably connected to the controller, wherein the controller is configured to provide electrical power from the electric energy storage unit to the first electric machine such that the electric machine rotates the compressor and the turbine during the borescope inspection of the turbomachine in response to receiving an input from the remote control.
16. The hybrid-electric propulsion system of any of clauses 13 to 15, wherein energy storage unit is configured to store at least about fifty kilowatt-hours of electrical power, and wherein the first electric machine is configured to generate at least about fifty kilowatts of electrical power during operation of the turbomachine.
17. The hybrid-electric propulsion system of any of clauses 13 to 16, wherein the turbine and the compressor at least partially define a core air flowpath, and wherein the electric machine is positioned inward of the core air flowpath.
18. The hybrid-electric propulsion system of any of clauses 13 to 17, wherein the first lectric machine is an electric motor/generator.
19. The hybrid-electric propulsion system of any of clauses 13 to 18, wherein the turbomachine is configured as part of a first turbofan engine, and wherein the propulsor is configured as part of a second turbofan engine.
20. The hybrid-electric propulsion system of any of clauses 13 to 19, wherein the turbomachine is configured as part of a turbofan engine, and wherein the propulsor is configured as part of an electric propulsor assembly.

## Claims

1. A method (300) for operating a hybrid-electric propulsion system of an aircraft, the hybrid-electric propulsion system comprising a propulsor, a turbomachine, and an electrical system, the electrical system comprising a first electric machine coupled to the turbomachine and an electric energy storage unit, the method comprising:
operating (302) the hybrid electric propulsion system in a flight operation mode, wherein operating the hybrid electric propulsion system in the flight operation mode (302) comprises rotating (304) the first electric machine with the turbomachine to generate electrical power and provide at least a portion of such electrical power to the electric energy storage unit; and
operating (312) the hybrid electric propulsion system in a maintenance operation mode, wherein operating the hybrid electric propulsion system in the maintenance operation mode (312) comprises providing (314) electrical power from an electrical power source to the first electric machine such that the first electric machine rotates a compressor and a turbine of the turbomachine during a borescope inspection of the turbomachine.

2. The method of claim 1, wherein the hybrid electric propulsion system further comprises a propulsor, wherein the electrical system further comprises a second electric machine coupled to the propulsor, and wherein operating the hybrid electric propulsion system in the flight operation mode (302) further comprises providing (308) electrical power from the first electric machine, the electric energy storage unit, or both to the second electric machine to drive the propulsor and provide a propulsive benefit for the aircraft.

3. The method of claim 1 or 2, wherein providing (314) electrical power from the electrical power source to the first electric machine such that the first electric machine rotates the compressor and the turbine of the turbomachine during the borescope inspection comprises rotating (316) the compressor and the turbine with the first electric machine at a rotational speed less than about five revolutions per minute.

4. The method of any preceding claim, wherein providing (314) electrical power from the electrical power source to the first electric machine such that the first electric machine rotates the compressor and the turbine of the turbomachine during the borescope inspection comprises rotating (318) the compressor and the turbine with the first electric machine at a rotational speed less than about one revolution per minute.

5. The method of any preceding claim, wherein operating the hybrid electric propulsion system in the maintenance operation mode (312) further comprises receiving (320) a user input command to rotate the compressor and the turbine of the turbomachine during the borescope inspection of the turbomachine, and wherein providing (314) electrical power from the electrical power source to the first electric machine such that the first electric machine rotates the compressor and the turbine during the borescope inspection comprises providing (322) electrical power from the electrical power source to the first electric machine such that the first electric machine rotates the compressor and the turbine during the borescope inspection in response to receiving the user input command.

6. The method of any preceding claim, wherein the turbomachine defines a core air flowpath and further comprises a spool coupling the compressor and the turbine, and wherein the first electric machine is mechanically coupled to, and rotatable with, the compressor, the turbine, and the spool at a location inward of the core air flowpath.

7. The method of any preceding claim, wherein the turbine is a high pressure turbine, wherein the compressor is a high pressure compressor, wherein the spool is a high pressure spool, and wherein the turbomachine further comprises a low pressure turbine, a low pressure compressor, and a low pressure shaft coupling the low pressure compressor and the low pressure turbine.

8. The method of any preceding claim, wherein operating the hybrid electric propulsion system in the flight operation mode (302) further comprises providing (310) electrical power from the electric energy storage unit to the first electric machine such that the first electric machine rotates, or assists with rotating, the turbomachine.

9. The method of any preceding claim, wherein rotating the first electric machine with the turbomachine to generate electrical power (304) comprises generating at least about fifty kilowatts of electrical power.

10. The method of any preceding claim, wherein electric energy storage unit is configured to store at least about fifty kilowatt-hours of electrical power.

11. The method of any preceding claim, wherein the electrical power source is the electric energy storage unit.

12. The method of any preceding claim, wherein providing electrical power from the electrical power source to the first electric machine such that the first electric machine rotates the compressor and the turbine of the turbomachine during the borescope inspection comprises rotating the compressor and the turbine with the first electric machine to a specified angular position.

13. A hybrid-electric propulsion system (50) comprising:
a propulsor (104A);
a turbomachine (102A);
an electrical system comprising a first electric machine (56A), a second electric machine (56B), and an electric energy storage unit (55) electrically connectable the first and second electric machines (56A, 56B), the first electric machine (56A) coupled to the turbomachine (102A) and the second electric machine (56B) coupled to the propulsor (104A) for driving the propulsor (104A) to provide a propulsive benefit for the aircraft; and
a controller (72) configured to provide electrical power from the electric energy storage unit (55) to the first electric machine (56A) such that the first electric machine (56A) rotates the compressor and the turbine of the turbomachine (102A) during a borescope inspection of the turbomachine (102A).

14. The hybrid-electric propulsion system of claim 13, wherein the controller (72) is configured to rotate the compressor and turbine of the turbomachine (102A) at a rotational speed less than five revolutions per minute during the borescope inspection of the turbomachine (102A).

15. The hybrid-electric propulsion system of claim 13 or 14, further comprising:
a remote control (73) operably connected to the controller (72), wherein the controller (72) is configured to provide electrical power from the electric energy storage unit (55) to the first electric machine (56A) such that the electric machine rotates the compressor and the turbine during the borescope inspection of the turbomachine (102A) in response to receiving an input from the remote control (73).
